# DEMANDE DE BREVET EUROPEEN

(11) **EP 1 471 753 A1**
(43) Date de publication de la demande: **27.10.2004**
(21) Numéro de dépôt: 04290956.4
(22) Date de dépôt: 09.04.2004
(51) Int. Cl.: H04Q 7/32

(54) **Procédé de sécurisation d'un terminal mobile et de contrôle des fonctions nécessitant un niveau de sécurité élève**

(30) Priorité: 23.04.2003 FR 0304974
(71) Demandeur: FRANCE TELECOM, 75015 Paris (FR)
(72) Inventeur: Pailles, Jean-Claude, 14610 Epron (FR); Remery, Patrick, 14000 Caen (FR)
(74) Mandataire: de Roquemaurel, Bruno

(57) **Abrégé**

Pour sécuriser un terminal de télécommunication (1) connecté à un module d'identification (2) d'un utilisateur du terminal, ce procédé comprend une étape d'exécution d'une procédure d'appairage (10) dans laquelle : le terminal (1) transmet (11) au module d'identification (2) connecté au terminal des informations d'identification du terminal, et le module d'identification compare (22) les informations d'identification reçues du terminal à des informations d'identification de terminal stockées dans une mémoire (31), transmet le résultat de la comparaison au terminal, et si les informations d'identification stockées par le module d'identification correspondent à celles du terminal, positionne un indicateur interne d'appairage (LOCK) indiquant que le terminal est identifié par le module d'identification.

## Description

La présente invention concerne un procédé de sécurisation d'un terminal de communication de son utilisateur.

Elle s'applique notamment, mais non exclusivement aux terminaux de télécommunication mobiles prévus pour recevoir un module sécurisé d'authentification de l'utilisateur. Ces terminaux sont par exemple conforme à la norme GSM (Global System for Mobile communications) ou UMTS (Universal Mobile Telecommunications System). D'une manière plus générale, elle s'applique également à tout terminal comprenant un module de télécommunication conçu pour recevoir un tel module d'authentification.

De nombreuses applications faisant intervenir un réseau public de transmission de données, tel que le réseau Internet, impliquent d'authentifier à distance l'utilisateur. De telles applications nécessitent de déterminer l'existence d'un droit de l'utilisateur ou d'authentifier une information qu'il fournit, ou encore d'assurer la transmission par le réseau d'une information confidentielle à un utilisateur bien identifié.

Ces opérations impliquent de pouvoir identifier l'utilisateur d'une manière fiable et sécurisée. A cet effet, on utilise généralement un dispositif électronique tel qu'une carte à puce ou un jeton (token) d'authentification ou de sécurité, qui stocke des clés et est capable d'exécuter des procédures cryptographiques, notamment d'identification pour prouver qu'il détient une clé, ou pour déchiffrer un message confidentiel.

Les téléphones mobiles, notamment de type GSM, contiennent généralement un module d'identification sous la forme d'une carte à puce appelée carte SIM (Subscriber Identification Module) permettant d'identifier le propriétaire du téléphone mobile auprès du réseau de téléphonie. Pour pouvoir utiliser son téléphone mobile, l'utilisateur doit introduire un code confidentiel qui est vérifié par le module d'identification SIM. A cet effet, le module d'identification SIM possède les fonctionnalités cryptographiques mentionnées ci-avant. Il peut donc être utilisé dans une application faisant intervenir la génération d'une signature électronique, par exemple portant sur les termes d'une transaction entre un prestataire et l'utilisateur du téléphone mobile, sachant que l'utilisateur a été préalablement authentifié par son téléphone mobile en introduisant son code confidentiel ou un code confidentiel dédié à la fonction de génération de signature, et que ce code confidentiel est vérifié par le module d'identification.

Dans les applications de commerce électronique, il est en effet essentiel que le prestataire puisse reconnaître et avoir confiance dans une telle signature, de manière à éviter que l'utilisateur puisse contester une transaction en prétendant ne jamais avoir réalisé cette transaction ou avoir fourni (volontairement ou non) à un tiers son code confidentiel, ou encore avoir signé une autre transaction différente.

Le module d'identification SIM peut également être utilisé dans une application de transmission d'un message confidentiel. Lors de la réception d'un message chiffré, la carte SIM peut en effet se charger de calculer la clé de déchiffrement du message reçu afin de permettre au téléphone mobile de déchiffrer et d'afficher le message en clair.
Dans ce type d'application, il est également nécessaire que l'émetteur du message soit certain que son message est envoyé vers le terminal du destinataire choisi et que seul le destinataire pourra le déchiffrer.

Toutefois, il s'avère que la sécurité offerte par la carte SIM n'est pas suffisante à elle seule pour assurer une sécurité convaincante, surtout avec l'apparition des téléphones mobiles de troisième génération, c'est-à-dire possédant des capacités aptes à recevoir et contenir plusieurs applications délivrées par différents prestataires. En effet, dans ce contexte, il n'est pas possible d'assurer que le terminal utilisé ne recèle pas des défauts, des virus ou des chevaux de Troie, permettant par exemple de réémettre un message chiffré vers un autre terminal.

Il apparaît donc le besoin de prouver à distance que l'ensemble terminal mobile + logiciel chargé dans le terminal est intègre et possède les qualités sécuritaires requises.

A cet effet, le terminal mobile peut se protéger des virus et chevaux de Troie en n'acceptant de ne télécharger de nouvelles applications que s'il peut authentifier leur origine et leur intégrité, ou si cela n'est pas le cas, en les confinant de façon à ce qu'elles ne puissent en aucun cas altérer l'ensemble du terminal. Il est en outre nécessaire de prévoir une fonction d'authentification permettant à des prestataires distants de vérifier que le terminal mobile possède bien les qualités sécuritaires requises.

Or la carte SIM est insuffisante pour offrir une telle fonction d'authentification étant donné qu'elle est amovible et peut être installée dans n'importe quel terminal.

Il n'est par ailleurs par question d'empêcher un utilisateur de pouvoir utiliser une même carte SIM avec plusieurs terminaux, notamment pour changer de terminal.

La présente invention a pour but de supprimer cet inconvénient. Cet objectif est atteint par la prévision d'un procédé de sécurisation d'un terminal de télécommunication connecté à un module d'identification d'un utilisateur du terminal, le procédé comprenant l'exécution d'une procédure d'appairage dans laquelle :
- le terminal transmet au module d'identification connecté au terminal des informations d'identification du terminal, et
- le module d'identification compare les informations d'identification reçues du terminal à des informations d'identification de terminal stockées dans une mémoire, et transmet le résultat de la comparaison au terminal.

Selon l'invention, la procédure d'appairage comprend en outre des étapes dans lesquelles :
- si les informations d'identification stockées par le module d'identification correspondent à celles du terminal, le module d'identification positionne un indicateur interne d'appairage indiquant que le terminal est identifié par le module d'identification, et
- si l'indicateur interne d'appairage n'est pas préalablement positionné par le module d'identification, le terminal empêche l'activation d'une fonction nécessitant un degré de sécurité élevé installée dans le terminal, les autres fonctions du terminal restant accessibles.

Avantageusement, la procédure d'appairage est exécutée à chaque mise sous tension du terminal.

Selon une particularité de l'invention, si les informations d'identification stockées par le module d'identification ne correspondent pas à celles du terminal, le terminal déclenche une procédure de mise à jour des informations d'identification stockées par le module d'identification, dans laquelle le module d'identification authentifie préalablement une autorité habilitée à effectuer cette mise à jour, et si l'authentification réussit, le module d'identification mémorise les informations d'identification de terminal reçues et positionne l'indicateur interne d'appairage.

De préférence, le module d'identification mémorise les informations d'identification de plusieurs terminaux.

Egalement de préférence, une liste ou une séquence d'informations d'identification de terminaux est enregistrée dans la mémoire du module d'identification lorsqu'il est remis à l'utilisateur.

Selon une autre particularité de l'invention, ce procédé comprend l'exécution d'une procédure de mise à jour de la liste ou séquence d'informations d'identification de terminaux, mémorisée par le module d'identification, effectuée par l'intermédiaire d'un réseau de transmission de données par une autorité habilitée, cette procédure comprenant une étape d'authentification de l'autorité habilitée par le module d'identification.

Avantageusement, les informations d'identification de terminal comprennent des informations de profil du terminal.

De préférence, l'accès en lecture aux informations d'identification de terminaux, stockées par le module d'identification est protégé soit par mot de passe, soit par une procédure de signature active, afin d'empêcher l'appairage du module d'identification à un terminal non agréé.

Selon une autre particularité de l'invention, l'exécution d'une procédure nécessitant un degré de sécurité élevé n'est effectuée qu'à la suite d'une étape de saisie par l'utilisateur sur le terminal d'un code confidentiel, et de vérification par le module d'identification de ce code confidentiel, l'exécution d'une procédure nécessitant un degré de sécurité élevé étant effectuée uniquement si le code confidentiel saisi par l'utilisateur est correct.

De préférence, les procédures nécessitant un degré de sécurité élevé comprennent une procédure de génération de signature électronique.

Selon une autre particularité de l'invention, les procédures nécessitant un degré de sécurité élevé comprennent une procédure de réception et de déchiffrement d'un message chiffré à l'aide d'une clé secrète mémorisée par le module d'identification.

Selon encore une autre particularité de l'invention, les procédures nécessitant un degré de sécurité élevé comprennent une procédure d'autorisation d'accès à des contenus stockés dans la mémoire du terminal, chacun des contenus étant associé à des niveaux d'autorisation d'accès en fonction de modes d'accès au contenu, un niveau d'autorisation d'accès étant attribué à chaque utilisateur du terminal, la procédure d'accès donnant à un utilisateur un accès à un contenu demandé pour un mode d'accès spécifié par l'utilisateur uniquement si l'utilisateur possède un niveau d'autorisation d'accès correspondant au mode d'accès spécifié du contenu demandé.

Selon encore une autre particularité de l'invention, certains des contenus stockés dans la mémoire du terminal sont associés à une licence mémorisée par le module d'identification ou transmise au module d'identification par le terminal, la licence étant vérifiée par le module d'identification afin d'autoriser ou non l'accès au contenu associé.

L'invention concerne également un terminal de télécommunication, éventuellement de type terminal mobile, comprenant des moyens pour se connecter à un module d'identification, et pour mettre en oeuvre le procédé selon l'invention défini ci-avant.

Avantageusement, le module d'identification est une carte à microcircuit, les moyens de connexion comprenant un connecteur pour carte à microcircuit.

L'invention concerne également un module d'identification pour terminal de télécommunication, par exemple de type carte à microcircuit, comprenant des moyens pour se connecter à un terminal, et des moyens pour mettre en oeuvre le procédé selon l'invention défini ci-avant.

Un mode de réalisation préféré de l'invention sera décrit ci-après, à titre d'exemple non limitatif, avec référence aux dessins annexés dans lesquels :
La figure 1 illustre sous la forme d'un diagramme de séquences de traitements une procédure d'appairage de terminal et de carte à puce, selon l'invention ;
La figure 2 illustre sous la forme d'un diagramme de séquences de traitements une procédure de signature d'une transaction, selon l'invention ;
La figure 3 illustre sous la forme d'un diagramme de séquences de traitements une procédure de réception d'un message chiffré, selon l'invention ;
La figure 4 illustre sous la forme d'un diagramme de séquences de traitements une procédure d'accès à un contenu mémorisé par le terminal, selon l'invention.

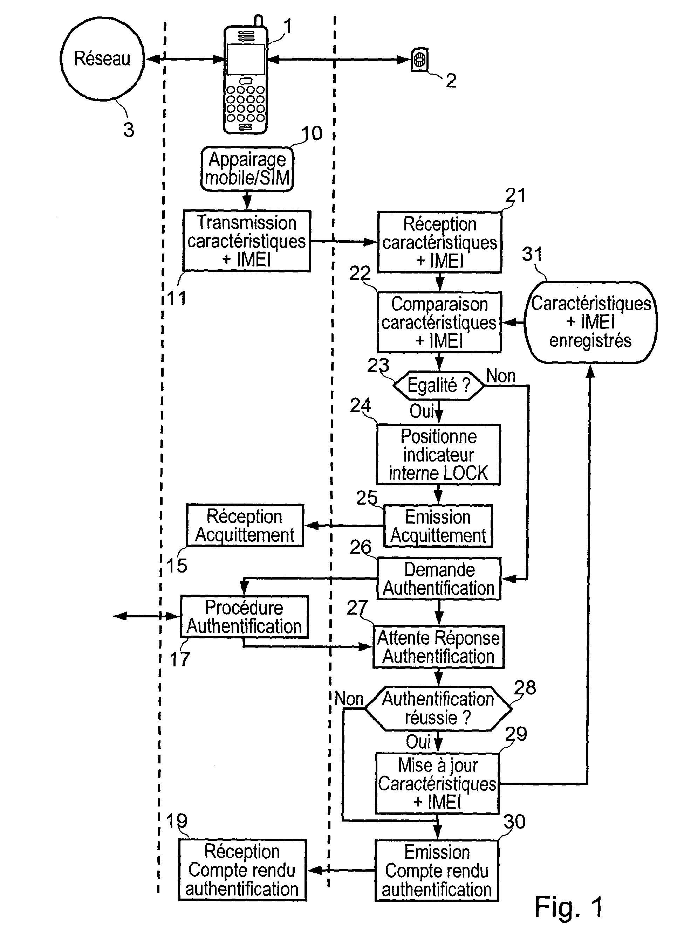

Sur la figure 1, le procédé selon l'invention est mis en oeuvre par un terminal mobile 1 conçu pour communiquer avec d'autres terminaux par l'intermédiaire d'un réseau 3 de téléphonie. Pour permettre à l'opérateur du réseau 3 d'identifier un utilisateur d'un tel terminal mobile 1, ce dernier intègre un dispositif d'identification 2 amovible, par exemple de type carte à microcircuit ou à microprocesseur, et des moyens de connexion pour se connecter à une telle carte. Dans un réseau mobile GSM ou UMTS, ce dispositif d'identification est appelé "module d'identification d'abonné" (SIM).

Chaque terminal mobile 1 est identifié par un numéro d'identification qui est stocké dans une mémoire du terminal. Dans les normes GSM et UMTS, ce numéro d'identification de terminal est appelé IMEI (International Mobile Equipment Identity).

Selon l'invention, chaque terminal mobile 1 et chaque module d'identification 2 est programmé pour exécuter une procédure d'appairage, consistant pour le module d'identification à demander au terminal auquel il est connecté son numéro d'identification IMEI, à vérifier que ce numéro correspond à un numéro d'identification de terminal mémorisé par le module d'identification, et à envoyer au terminal un compte rendu de cette vérification.
Si le module d'identification 2 a reconnu le terminal auquel il est connecté, il positionne un indicateur interne qui signifie que le terminal est réputé sûr et peut être utilisé pour une application sensible.

La procédure d'appairage illustrée sur la figure 1 est exécutée à la mise sous tension du terminal. Cette procédure comprend tout d'abord une étape 11 de transmission par le terminal 1 au module d'identification 2 de caractéristiques du terminal et en particulier du numéro d'identification du terminal IMEI. A l'étape 21, le module d'identification reçoit ces informations, et les compare à l'étape 22 avec les informations correspondantes 31 qu'il a préalablement enregistré. A l'étape suivante 23, si ces informations sont identiques à celles préalablement enregistrées, le module d'identification positionne à l'étape 24 un indicateur interne, appelé LOCK et émet un message d'acquittement (étape 25) à destination du terminal, lequel reçoit ce message à l'étape 15.

Si à l'étape 23, les informations d'identification du terminal reçues ne sont pas identiques à celles enregistrées par le module d'identification, le module d'identification déclenche une procédure d'authentification 17 sur le terminal. Cette procédure d'authentification peut consister à introduire à l'aide du clavier du terminal un simple mot de passe qui est transmis et vérifié à l'étape 27 par le module d'identification. Si l'authentification est réussie (étape 28), le module d'identification met à jour (étape 29) sa mémoire 31 avec les informations d'identification qui ont été transmises par le terminal à l'étape 21, positionne l'indicateur LOCK et transmet au terminal un compte rendu d'authentification réussie (étape 30). Sinon, il émet à l'étape 30 un compte rendu d'échec.
Le terminal reçoit ce message de compte rendu à l'étape 19.

On peut envisager la possibilité pour le module d'identification 2 d'enregistrer les informations d'identification de plusieurs terminaux, de manière à autoriser l'utilisateur à utiliser plusieurs terminaux différents, par exemple un terminal mobile ultra léger et un assistant électronique personnel (PDA) communiquant.

On peut également envisager d'enregistrer dans le module d'identification 2, au moment de sa remise à l'utilisateur, les informations d'identification de plusieurs terminaux, ceci pour automatiser la procédure d'appairage. Ainsi, les informations d'identification 31 mémorisées par le module 2 peuvent se présenter sous la forme d'une liste de numéros d'identification de terminaux reconnus et agréés sur le plan sécuritaire, ou de séquences de tels numéros.

Les informations d'appairage 31 mémorisées par le module d'identification peuvent ensuite être mises à jour par l'opérateur du réseau mobile qui peut envoyer ces informations par le réseau 3 au terminal 1, à destination du module d'identification. Une telle mise à jour de ces informations peut être effectuée à distance par l'intermédiaire du réseau 3, par une autorité habilitée (opérateur du réseau 3 ou une autorité chargée de l'agrément des terminaux mobiles) à l'aide d'une procédure sécurisée.

Par ailleurs, la procédure sécurisée de mise à jour de ces informations 31 doit assurer que seule l'autorité habilitée soit capable d'assurer de telles mises à jour, en se basant par exemple sur un sceau calculé avec une clé partagée entre l'autorité habilitée et le module d'identification 2.

La protection conférée par le positionnement de l'indicateur LOCK apparaît suffisante dans la plupart des cas. En effet, pour neutraliser cette protection, il faudrait :
- disposer d'un terminal agréé, c'est-à-dire appairé à un module d'identification SIM,
- obtenir le numéro d'identification IMEI du terminal, soit par une manipulation simple, soit en observant les échanges entre le terminal et le module d'identification par des moyens appropriés, et
- disposer d'un terminal (non agréé) acceptant la modification de son numéro d'IMEI.

Ce scénario suppose que l'utilisateur d'un terminal agréé coopère avec le fraudeur, ce qui n'est pas réaliste.

Toutefois, on peut prévoir de protéger l'accès en lecture des fichiers stockés par le module d'identification et contenant le ou les numéros d'identification de terminaux autorisés, soit par mot de passe, soit par une procédure de signature active, ceci afin d'empêcher l'appairage du module d'identification à un terminal non agréé.

Par ailleurs, on peut également prévoir d'ajouter aux informations d'identification du terminal 1 stockées dans le module d'identification 3 des informations de profil du terminal 1 : dans la norme 3GPP TS 31.111, il existe une commande "profile download" standardisée permettant au module d'identification de recevoir du terminal des informations de profil sur la configuration du terminal qui permettent au module d'identification de commander le terminal. Ces informations de profil regroupent notamment la taille de l'écran d'affichage du terminal, et des informations nécessaires à la fonction "Call Control" permettant d'empêcher que le terminal appelle certains numéros de téléphone et comprenant une liste de numéros interdits stockés par le module d'identification.

Une fois que le terminal 1 et le module d'identification 2 sont ainsi appairés, ils peuvent exécuter des applications nécessitant un niveau de sécurité élevé, comme par exemple la génération d'une signature appliquée par exemple à une transaction, l'accès à un message chiffré reçu, et le contrôle d'accès à des données confidentielles stockées dans le terminal.

Bien entendu, les autres fonctions du terminal restent accessibles lorsque le terminal n'est pas appairé.

Lorsqu'une application nécessitant un niveau élevé de sécurité est lancée sur le terminal, elle demande à l'utilisateur d'introduire au clavier un code confidentiel qui est émis dans une requête à destination du module d'identification. A la réception d'une telle requête, le module d'identification 2 vérifie si le code confidentiel introduit est correct et si l'indicateur LOCK est positionné. Si l'une ou l'autre de ces vérifications échoue, le module d'identification renvoie au terminal un message d'erreur. A la réception d'un tel message d'erreur, l'application exécutée par le terminal affiche le compte rendu d'erreur reçu et se termine. De cette manière, le terminal ne peut exécuter une application nécessitant un haut niveau de sécurité que si l'utilisateur est reconnu par le module d'identification et si celui-ci est appairé avec le terminal.

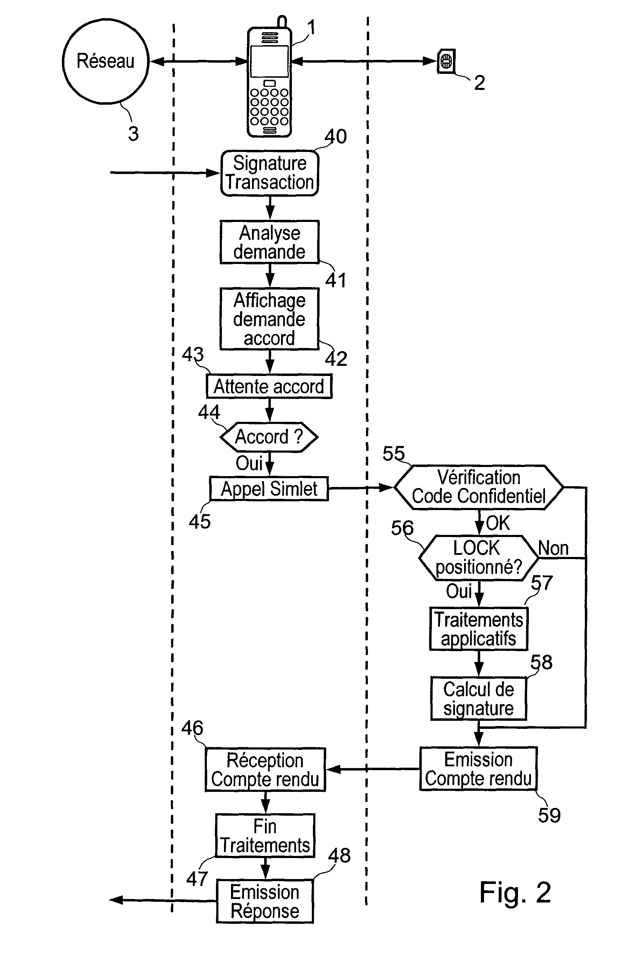

La figure 2 illustre une procédure de génération d'une signature appliquée à une transaction 40, permettant à l'utilisateur de valider son engagement dans la transaction, à l'aide de son terminal mobile 1. Cette procédure est déclenchée à la réception par le terminal d'un message de demande contenant les paramètres de la transaction. Ces paramètres contiennent notamment l'identité de l'autre partie à la transaction (par exemple l'identité du vendeur dans une transaction d'achat), l'objet de la transaction (la nature de la marchandise ou de la prestation achetée) et le montant de la transaction. S'il s'agit d'un jeu de pari, le message de demande contient l'identification du pari, les termes du pari introduit par l'utilisateur et le montant parié. Le message de demande est analysé par le terminal à l'étape 41 pour restituer d'une manière intelligible les informations relatives à la transaction, ces informations étant affichées à l'écran du terminal à l'étape 42.

A l'étape 43, le terminal invite ensuite l'utilisateur à donner son accord en introduisant un code confidentiel, et se met en attente de ce code confidentiel. A la suite de l'introduction de ce code confidentiel (étape 44), le terminal déclenche à l'étape 45 une procédure de vérification par le module d'identification. Cette procédure consiste pour le module 2 à vérifier le code confidentiel reçu (étape 55), et si l'indicateur LOCK est positionné (étape 56). Si ces contrôles sont positifs, le module d'identification exécute un traitement applicatif 57 qui dépend de la transaction envisagée. Ce traitement applicatif consiste par exemple à vérifier que le montant demandé est inférieur à un plafond glissant sur une certaine période, ce qui suppose que le module d'identification 2 enregistre et gère un historique des transactions réalisées. A l'étape suivante 58, le module d'identification calcule une signature qu'il renvoie dans un message de compte rendu (étape 59). Le terminal reçoit ce message à l'étape 46, termine le traitement applicatif à l'étape 47. Si le message de compte rendu est positif et contient la signature de la transaction, le terminal émet à l'étape 48 suivante par le réseau, un message de réponse au message de demande qui a déclenché la procédure 40.

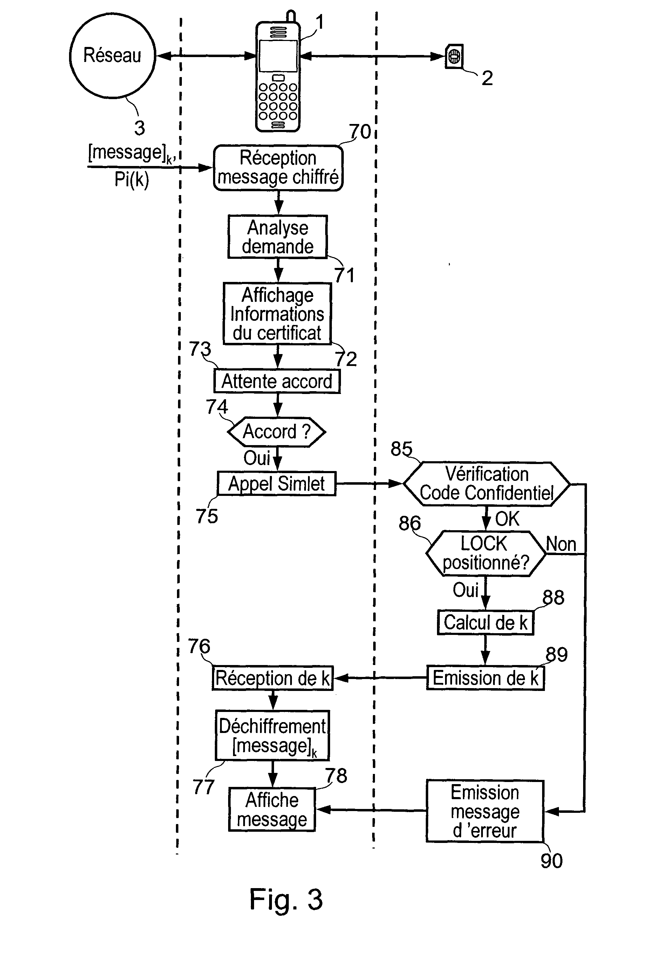

La figure 3 illustre une procédure 70 de réception d'un message chiffré. Cette procédure est déclenchée par la réception d'un message chiffré contenant le message proprement dit [message]ₖ, chiffré à l'aide d'une clé secrète k, et le résultat Pi(k) du chiffrement de la clé k à l'aide d'un algorithme asymétrique utilisant une clé publique Pi de l'utilisateur destinataire, correspondant à une clé privée Si mémorisée par le module d'identification 2.

Cette procédure comprend une étape 71 d'analyse de la demande consistant à distinguer les différentes informations contenues dans le message, à savoir le message chiffré, et la clé k chiffrée. Cette étape est suivie d'une étape 72 d'affichage des informations d'entête du message contenant par exemple l'identité de l'émetteur et l'objet du message. A l'étape suivante 73, l'utilisateur est invité à introduire son code confidentiel, de manière à l'authentifier. A l'introduction de ce code confidentiel à l'étape 74, un message contenant le code introduit et la clé k chiffrée Pi(k), est envoyé au module d'identification 2, ce qui déclenche l'exécution par ce dernier d'une procédure consistant dans une première étape 85 à vérifier le code confidentiel introduit par l'utilisateur, et dans une seconde étape 86 à vérifier que l'indicateur LOCK est positionné. Si ces vérifications sont positives, le module d'identification 2 déchiffre à l'étape suivante 88 la clé k à l'aide de la clé privée Si qu'il détient et qui correspond à la clé publique Pi. Cette clé k déchiffrée est renvoyée au terminal à l'étape 89 et reçue par ce dernier à l'étape 76 de la procédure 70. A l'étape 77 suivante, le terminal déchiffre le message [message]ₖ à l'aide de la clé k reçue du module d'identification 2, et l'affiche à l'écran (étape 78).

Si le code confidentiel saisi par l'utilisateur n'est pas correct ou si l'indicateur LOCK n'est pas positionné, le module d'identification renvoie au terminal un compte rendu négatif (étape 90) indiquant le type d'erreur rencontrée. A la réception de ce message de compte rendu, le terminal affiche un message d'erreur.

L'indicateur LOCK peut également être utilisé pour contrôler l'accès à des données stockées dans la mémoire du terminal 1. Il s'agit par exemple d'informations personnelles, ou de fichiers contenant une oeuvre protégée par un droit d'auteur. Le contrôle d'accès aux données en effectué en fonction du mode d'accès demandé, à savoir par exemple l'affichage ou la restitution, la modification, la copie, la transmission, le changement de nom ou l'impression de ces données.

Dans cette application d'accès aux données mémorisées par le terminal, chaque donnée ou fichier est associé à des niveaux hiérarchiques de protection en fonction de modes d'accès, et chaque utilisateur dont le code confidentiel est enregistré dans le module d'identification est associé à un niveau de droit d'accès. Ainsi, par exemple le niveau 0 indique que l'accès au fichier est libre pour le mode d'accès correspondant, le niveau 1 indique que l'accès au fichier n'est autorisé pour le mode d'accès correspondant qu'aux utilisateurs possédant un niveau de droit d'accès équivalent ou supérieur, etc.

Ces niveaux hiérarchiques de protection attribués aux fichiers sont définis par le titulaire du terminal par une procédure spécifique sécuritaire exécutable uniquement lorsque le terminal est appairé (indicateur LOCK positionné) et lorsque le titulaire est authentifié par le module d'identification.

Après authentification de l'utilisateur (par code confidentiel) et vérification de l'état de l'indicateur LOCK, l'accès aux données est autorisé.
En outre, ces fichiers ou données peuvent être chiffrés. Dans ce cas, le module d'identification effectue le déchiffrement de ces données lorsque l'authentification de l'utilisateur est effectuée correctement et si l'indicateur LOCK est positionné.

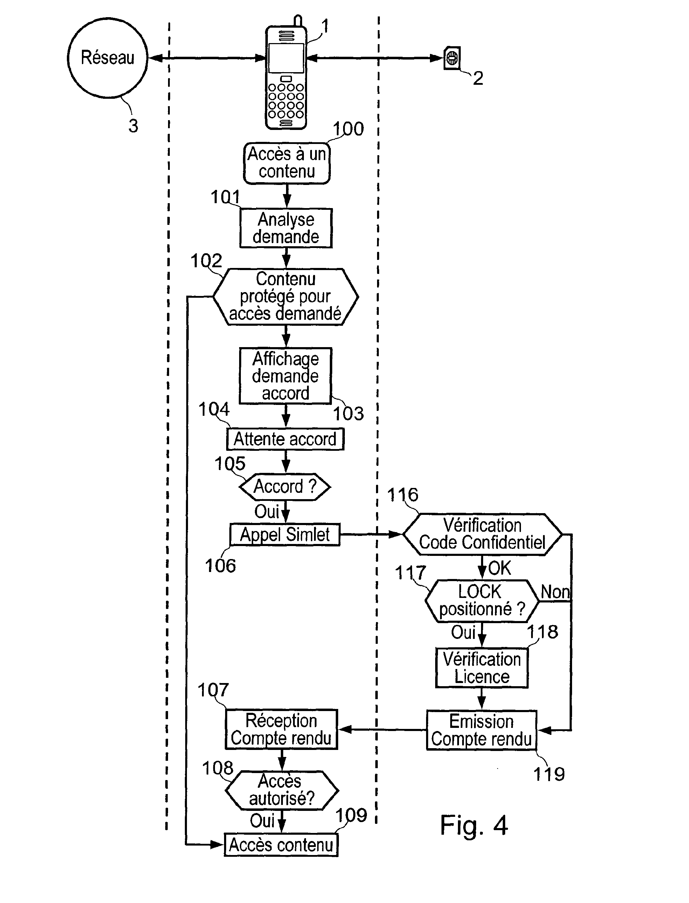

La figure 4 illustre une procédure 100 de contrôle d'accès à un contenu mémorisé dans la mémoire du terminal mobile 1. Cette procédure est déclenchée par l'utilisateur lorsqu'il tente d'accéder à un contenu qu'il a spécifié.
Cette procédure comprend une étape 101 d'analyse de la demande d'accès, consistant notamment à déterminer le niveau de droit d'accès requis pour le fichier et le mode d'accès au fichier demandés.

A l'étape suivante 102, le terminal teste le niveau de droit d'accès requis et passe directement à l'étape 109 d'accès au fichier demandé si le niveau de droit d'accès correspondant au fichier et au mode d'accès ne demande pas de vérification des droits de l'utilisateur. Il peut en outre déterminer si une licence est associée au fichier, le passage à l'étape 109 étant effectué si tel n'est pas le cas.

Si le fichier demandé implique une vérification de droits d'accès et/ou de licence, le terminal invite l'utilisateur à introduire un code confidentiel (étape 103), et se met en attente de ce code confidentiel (étape 104). A la suite de l'introduction de ce code confidentiel (étape 105), le terminal déclenche à l'étape 106 une procédure de vérification par le module d'identification 2 avec en paramètre le code confidentiel introduit par l'utilisateur. Cette procédure consiste pour le module 2 à vérifier le code confidentiel reçu (étape 116), et si l'indicateur LOCK est positionné (étape 117). Si ces contrôles sont positifs, le module d'identification exécute des traitements applicatifs 118 qui dépendent du type de contenu demandé par l'utilisateur. Ces traitements applicatifs consistent par exemple à vérifier une signature de l'éditeur du contenu demandé, et/ou à vérifier que l'accès demandé par l'utilisateur est autorisé par une licence associée au contenu, mémorisée par le module d'identification. Une telle licence peut ainsi autoriser certains modes d'accès, éventuellement dans une plage de dates d'utilisation limitée, ou un certain nombre de fois.

Il est à noter que la licence peut être mémorisée par le terminal. Dans ce cas, elle est transmise pour vérification au module d'identification, avec le code confidentiel introduit par l'utilisateur.

A l'étape suivante 119, le module d'identification renvoie un message de compte rendu d'autorisation qui peut contenir une clé de déchiffrement permettant d'accéder au contenu, comme c'est le cas par exemple pour un contenu musical ou vidéo protégé par DRM (Digital Rights Management). Le terminal reçoit ce message à l'étape 107, et donne accès au contenu (étape 109) si cet accès est autorisé par le message de compte rendu (étape 108).

Dans toutes les procédures applicatives décrites ci-avant, l'authentification de l'utilisateur peut également être effectuée par une reconnaissance biométrique, en faisant intervenir une référence biométrique (par exemple une empreinte digitale) qui est introduite dans le terminal par l'utilisateur, cette référence étant transmise au module d'identification 2 qui la compare avec une référence stockée dans sa mémoire.

Plusieurs codes confidentiels ou références biométriques peuvent être stockées dans le module d'identification, de manière à pouvoir être employé par plusieurs utilisateurs. Dans ce cas, dans les applications de génération de signature électronique ou de réception d'un message chiffré, la clé privée choisie par le module d'identification pour générer une signature ou déchiffrer, dépend de l'identité de l'utilisateur qui aura ainsi été authentifié.

## Revendications

1. Procédé de sécurisation d'un terminal de télécommunication (1) connecté à un module d'identification (2) d'un utilisateur du terminal, comprenant une étape d'exécution d'une procédure d'appairage (10) dans laquelle :
- le terminal (1) transmet (11) au module d'identification (2) connecté au terminal des informations d'identification du terminal, et
- le module d'identification compare (22) les informations d'identification reçues du terminal à des informations d'identification de terminal stockées dans une mémoire (31), et transmet le résultat de la comparaison au terminal,
**caractérisé en ce que** la procédure d'appairage (10) comprend en outre des étapes au cours desquelles :
- si les informations d'identification stockées par le module d'identification correspondent à celles du terminal, le module d'identification (2) positionne un indicateur interne d'appairage (LOCK) indiquant que le terminal est identifié par le module d'identification, et
- si l'indicateur interne d'appairage (LOCK) n'est pas préalablement positionné par le module d'identification (2), le terminal (1) empêche l'activation d'une fonction (40, 70) nécessitant un degré de sécurité élevé installée dans le terminal, les autres fonctions du terminal restant accessibles.

2. Procédé de sécurisation selon la revendication 1,
**caractérisé en ce que** la procédure d'appairage (10) est exécutée à chaque mise sous tension du terminal (1).

3. Procédé de sécurisation selon la revendication 1 ou 2,
**caractérisé en ce que** si les informations d'identification stockées par le module d'identification (2) ne correspondent pas à celles du terminal (1), le terminal déclenche une procédure (29) de mise à jour des informations d'identification (31) stockées par le module d'identification, dans laquelle le module d'identification authentifie préalablement une autorité habilitée à effectuer cette mise à jour, et si l'authentification réussit, le module d'identification mémorise les informations d'identification de terminal reçues et positionne l'indicateur interne d'appairage.

4. Procédé de sécurisation selon l'une des revendications 1 à 3,
**caractérisé en ce que** le module d'identification (2) mémorise les informations d'identification de plusieurs terminaux (1).

5. Procédé de sécurisation selon l'une des revendications 1 à 4,
**caractérisé en ce qu'**une liste ou une séquence d'informations d'identification de terminaux est enregistrée dans la mémoire du module d'identification (2) lorsqu'il est remis à l'utilisateur.

6. Procédé de sécurisation selon la revendication 5,
**caractérisé en ce qu'**il comprend l'exécution d'une procédure de mise à jour de la liste ou séquence d'informations d'identification de terminaux, mémorisée par le module d'identification (2), effectuée par l'intermédiaire d'un réseau de transmission de données (3) par une autorité habilitée, cette procédure comprenant une étape d'authentification de l'autorité habilitée par le module d'identification.

7. Procédé de sécurisation selon l'une des revendications 1 à 6,
**caractérisé en ce que** les informations d'identification de terminal comprennent des informations de profil du terminal.

8. Procédé de sécurisation selon l'une des revendications 1 à 7,
**caractérisé en ce que** l'accès en lecture aux informations d'identification de terminaux, stockées par le module d'identification est protégé soit par mot de passe, soit par une procédure de signature active, afin d'empêcher l'appairage du module d'identification à un terminal non agréé.

9. Procédé de sécurisation selon l'une des revendications 1 à 8,
**caractérisé en ce que** l'exécution d'une procédure nécessitant un degré de sécurité élevé (40, 70) n'est effectuée qu'à la suite d'une étape de saisie par l'utilisateur sur le terminal (1) d'un code confidentiel, et de vérification par le module d'identification (2) de ce code confidentiel, l'exécution d'une procédure nécessitant un degré de sécurité élevé étant effectuée uniquement si le code confidentiel saisi par l'utilisateur est correct.

10. Procédé de sécurisation selon l'une des revendications 1 à 9,
**caractérisé en ce que** les procédures nécessitant un degré de sécurité élevé comprennent une procédure (40) de génération de signature électronique.

11. Procédé de sécurisation selon l'une des revendications 1 à 10,
**caractérisé en ce que** les procédures nécessitant un degré de sécurité élevé comprennent une procédure de réception (70) et de déchiffrement d'un message chiffré à l'aide d'une clé secrète mémorisée par le module d'identification.

12. Procédé de sécurisation selon l'une des revendications 1 à 11,
**caractérisé en ce que** les procédures nécessitant un degré de sécurité élevé comprennent une procédure (100) d'autorisation d'accès à des contenus stockés dans la mémoire du terminal (1), chacun des contenus étant associé à des niveaux d'autorisation d'accès en fonction de modes d'accès au contenu, un niveau d'autorisation d'accès étant attribué à chaque utilisateur du terminal, la procédure d'accès donnant à un utilisateur un accès à un contenu demandé pour un mode d'accès spécifié par l'utilisateur uniquement si l'utilisateur possède un niveau d'autorisation d'accès correspondant au mode d'accès spécifié du contenu demandé.

13. Procédé de sécurisation selon la revendication 12,
**caractérisé en ce que** certains des contenus stockés dans la mémoire du terminal sont associés à une licence mémorisée par le module d'identification (2) ou transmise au module d'identification par le terminal (1), la licence étant vérifiée par le module d'identification afin d'autoriser ou non l'accès au contenu associé.

14. Terminal de télécommunication comprenant des moyens pour se connecter à un module d'identification,
**caractérisé en ce qu'**il comprend des moyens pour mettre en oeuvre le procédé selon l'une des revendications 1 à 13.

15. Terminal selon la revendication 14,
**caractérisé en ce que** le module d'identification est une carte à microcircuit, les moyens de connexion comprenant un connecteur pour carte à microcircuit.

16. Terminal selon la revendication 15,
**caractérisé en ce qu'**il est de type terminal mobile.

17. Module d'identification pour terminal de télécommunication, comprenant des moyens pour se connecter à un terminal,
**caractérisé en ce qu'**il comprend des moyens pour mettre en oeuvre le procédé selon l'une des revendications 1 à 13.

18. Module d'identification selon la revendication 17,
**caractérisé en ce qu'**il est de type carte à microcircuit munie de moyens de connexion du microcircuit à un terminal de télécommunication.
